**Europäisches Patentamt**

**European Patent Office**

**Office européen des brevets**

(19)

(11) Veröffentlichungsnummer: **0 307 590**
**B1**

(12) # EUROPÄISCHE PATENTSCHRIFT

(45) Veröffentlichungstag der Patentschrift:
**27.12.90**

(51) Int. Cl.⁵: **F16B 13/12**

(21) Anmeldenummer: **88112083.6**

(22) Anmeldetag: **27.07.88**

(54) Spreizdübel.

(30) Priorität: **15.09.87 DE 3730860**

(43) Veröffentlichungstag der Anmeldung:
**22.03.89 Patentblatt 89/12**

(45) Bekanntmachung des Hinweises auf die Patenterteilung:
**27.12.90 Patentblatt 90/52**

(84) Benannte Vertragsstaaten:
**AT BE CH DE ES FR GB IT LI NL SE**

(56) Entgegenhaltungen:
**DE-A- 2 737 857**
**FR-A- 2 273 968**
**GB-A- 569 774**
**GB-A- 640 451**
**US-A- 1 601 796**
**US-A- 1 934 560**
**US-A- 2 596 952**

(73) Patentinhaber: **HILTI Aktiengesellschaft,**
**FL-9494 Schaan(LI)**

(72) Erfinder: **Herb, Armin, Wiesenweg, D-8921 Apfeldorf(DE)**

(74) Vertreter: **Wildi, Roland, Hilti Aktiengesellschaft**
**Patentabteilung, FL-9494 Schaan(LI)**

## Beschreibung

Die Erfindung betrifft einen Spreizdübel mit teilweise axial geschlitzter Spreizhülse aus Blech, die von ihrem der Setzrichtung abgewandten, rückwärtigen Ende her mit einem Innengewinde versehen ist, eine sich zum vorderen Ende hin verengende Bohrung aufweist und in dem sich verengenden Bereich mit nach aussen geprägten Sicken versehen ist.

Für untergeordnete Befestigungen werden häufig Kunststoffdübel eingesetzt. Diese Kunststoffdübel haben allerdings den Nachteil, dass die Befestigung im Brandfalle dahinfällt. Aus diesem Grunde wird vermehrt auf einfache Dübel aus Blech übergegangen.

Solche, beispielsweise aus der GB-A 569 774 bekannten Blechdübel bestehen aus einer gerollten Spreizhülse mit einem Schraubgewinde für eine Befestigungsschraube. Zum Verspreizen weisen die Spreizhülsen dieser bekannten Dübel eine sich zum vorderen Ende hin verengende Bohrung auf, die durch nach aussen geprägte Sicken zustande kommt.

Aus der Sicht der Herstellung haben diese bekannten Dübel den Vorteil einer grossen Wirtschaftlichkeit; aus der Sicht der Anwendung, jedoch den Nachteil, dass die Verankerungswerte relativ stark abfallen, wenn die Bohrung im Aufnahmematerial zu gross ist oder es sich um zu weiches Aufnahmematerial handelt.

Der Erfindung liegt die Aufgabe zugrunde, einen einfach und wirtschaftlich herstellbaren Spreizdübel zu schaffen, der in allen Anwendungsfällen ausreichend hohe Verankerungswerte gewährleistet.

Gemäss der Erfindung wird dies dadurch erreicht, dass die Sicken wenigstens eine zur Hülsenlängsachse geneigte, gegen das rückwärtige Ende der Spreizhülse hingewandte Flanke aufweisen.

Beim Spreizvorgang werden die nach aussen geprägten, vorstehenden Sicken wenigstens teilweise in die Bohrlochwandung des Aufnahmematerials eingedrückt. Die gegen das rückwärtige Ende der Spreizhülse gerichtete Flanke der Sicken bildet dabei mit dem Aufnahmematerial eine Art Formschluss, wobei entgegen der Auszugsrichtung wirkende Angriffsflächen entstehen. Die Verankerungswerte bleiben somit auch bei ungenauen Aufnahmebohrungen und in weichem Aufnahmematerial bestehen.

Eine zweckmässige Ausführung besteht darin, dass die Sicken eine gegen das vordere Ende zunehmende Breite aufweisen. Durch die gegen das vordere Ende zunehmende Breite der Sicken wird die Auflagefläche des Spreizdübels an der Bohrlochwandung gegen das vordere Ende vergrössert und somit eine gleichmässigere Verteilung des Spreizdruckes erzielt. Die gegen das rückwärtige Ende der Spreizhülse hingewandte Flanke wird dabei durch wenigstens eine der seitlichen Flanken der Sicke gebildet.

Eine weitere vorteilhafte Ausführung besteht darin, dass die Sicken gegenüber der Längsachse der Spreizhülse geneigt angeordnet sind. Bei einer gegenüber der Längsachse der Spreizhülse geneigten Anordnung der Sicken bildet die eine Seitenflanke der Sicken die gegen das rückwärtige Ende der Spreizhülse hingewandte Flanke. Die Neigungsrichtung der Sicken ist vorzugsweise so zu wählen, dass diese in Eindrehrichtung des Innengewindes weisen. Somit wird verhindert, dass beim Eindrehen einer Schraube die Spreizhülse aus dem Bohrloch herausgeschraubt wird.

Die Sicken sind zweckmässigerweise so ausgebildet, dass der Durchmesser des die Sicken umgebenden Hüllkreises zum vorderen Ende der Spreizhülse hin zunimmt. Die gegen das rückwärtige Ende der Spreizhülse hingewandte Flanke der Sicken wird somit durch die Mantelfläche der Spreizhülse gebildet. Dies ermöglicht eine grossflächige Anlage der Spreizhülse an der Bohrlochwandung. Der Durchmesser des die Sicken umgebenden Hüllkreises kann zum vorderen Ende der Spreizhülse hin stetig oder stufenweise zunehmen, so dass zur Längsachse der Spreizhülse geneigte oder dazu senkrecht stehende, gegen das rückwärtige Ende der Spreizhülse gerichtete Flanken entstehen.

Die Gewindegänge des Innengewindes werden vorzugsweise vor dem Rollvorgang in den Blechzuschnitt eingepresst oder eingewalzt. Diese Herstellungsart ermöglicht nur eine beschränkte Genauigkeit des Innengewindes. Es ist daher vorteilhaft, wenn die zwischen den Sicken verbleibenden Stege in Eindrehrichtung des Innengewindes einen sich reduzierenden Radius aufweisen. Eine solche Ausbildung der zwischen den Sicken verbleibenden Stege ermöglicht ein leichteres Eindrehen einer Schraube in die Spreizhülse, indem die Gewindeflanken erst nach einem bestimmten Verdrehwinkel voll miteinander in Eingriff gelangen. Eine solche Ausbildung der Stege ergibt auch eine günstige Verteilung des Spreizdruckes entlang des Umfanges.

An ihrem vorderen Ende weist die Spreizhülse zweckmässigerweise einen umlaufenden Wulst auf. Ein umlaufender Wulst verstärkt die Hülse in dem beim Aufspreizen am stärksten beanspruchten vorderen Endbereich und verhindert somit Beschädigungen der Spreizhülse. Das Umbiegen bzw. Falten des Wulstes erfolgt vorzugsweise vor dem Rollvorgang zum Herstellen der Spreizhülse.

Der Wulst ist vorteilhaft nach aussen umgebogen. Ein nach aussen umgebogener Wulst kommt beim Spreizvorgang an der Bohrlochwandung zur Anlage und ergibt eine gleichmässige Verteilung des Spreizdruckes. Die gegen das rückwärtige Ende der Spreizhülse gerichtete freie Kante des Wulstes ermöglicht ein zusätzliches formschlüssiges Verhaken in der Bohrlochwandung, was zu höheren Auszugswerten führt. Durch das Umbiegen des Wulstes nach aussen entsteht am vorderen Ende des Spreizdübels eine Rundung, welche das Einführen des Spreizdübels in ein Bohrloch erleichtert.

Der Aussendurchmesser des Wulstes entspricht zweckmässigerweise dem grössten Aussendurchmesser der Spreizhülse. Dadurch ist sichergestellt, dass der Wulst bereits zu Beginn des Spreizvorganges an der Bohrlochwandung zur Anlage kommt. Eine solche Anlage des Wulstes an der Bohrlochwandung hilft mit, ein Mitdrehen der Spreizhülse beim durch Eindrehen einer Schraube erfolgenden Spreizvorgang zu verhindern.

Das rückwärtige, freie Ende des Wulstes erstreckt sich vorteilhaft im wesentlichen entlang der vorderen Hälfte der Spreizhülse, was vor allem das sichere Eindrehen der Schraube sicherstellt. Im Bereich der Sicken kann der Wulst Aussparungen aufweisen, um zu verhindern, dass in diesem Bereich eine übermässige Materialüberlappung entsteht.

Die Erfindung soll nachstehend anhand der sie beispielsweise wiedergebenden Zeichnungen näher erläutert werden. Es zeigen:

Fig. 1 einen Spreizdübel, teilweise im Längsschnitt,

Fig. 2 einen Querschnitt durch den in Fig. 1 dargestellten Spreizdübel, entlang der Linie II-II,

Fig. 3 einen Ausschnitt des in Fig. 2 dargestellten Spreizdübels, in vergrössertem Massstab,

Fig. 4 eine weitere Ausführungsform eines Spreizdübels,

Fig. 5 eine weitere Ausführungsform eines Spreizdübels, teilweise im Längsschnitt,

Fig. 6 eine stirnseitige Ansicht des in Fig. 5 dargestellten Spreizdübels entsprechend Pfeil VI.

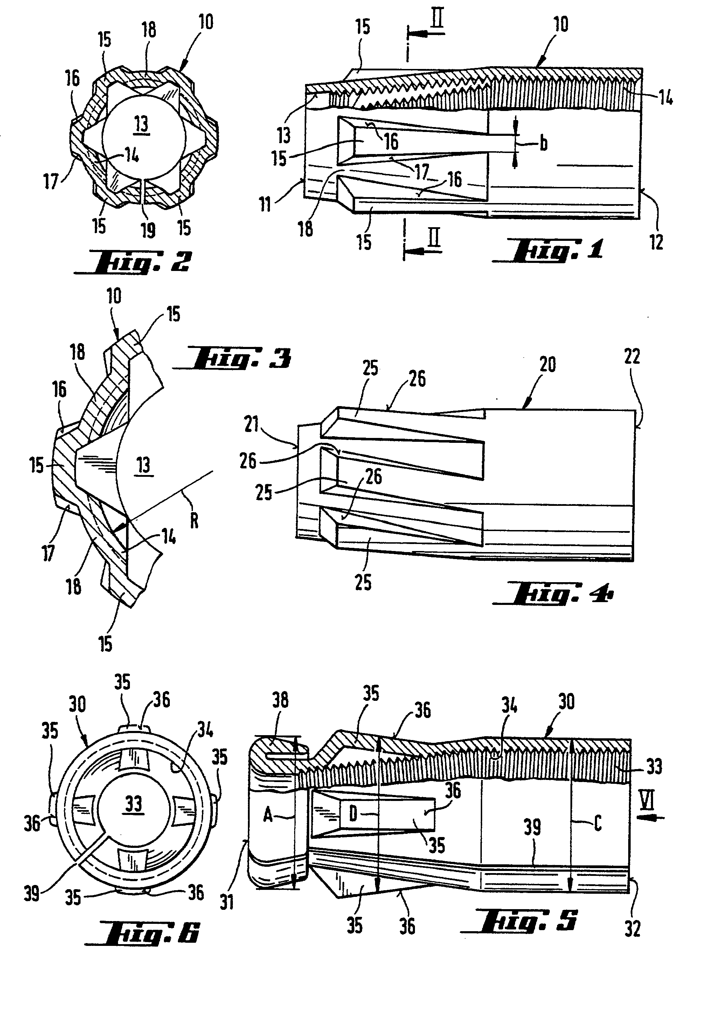

Der aus Fig. 1 bis 3 ersichtliche Spreizdübel weist eine Spreizhülse 10 mit einem in Setzrichtung vorderen Ende 11 und einem rückwärtigen Ende 12 auf. Die Spreizhülse 10 ist mit einer sich zum vorderen Ende 11 hin verengenden Bohrung 13 versehen und weist ferner ein vom rückwärtigen Ende 12 ausgehendes Innengewinde 14 auf. Die Spreizhülse 10 ist mit in Längsrichtung verlaufenden, nach aussen geprägten Sicken 15 versehen. Die Sicken 15 weisen eine gegen das vordere Ende 11 hin zunehmende Breite b auf. Diese zum vorderen Ende 11 hin zunehmende Breite der Sicken 15 ergibt gegen das rückwärtige Ende 12 der Spreizhülse hingewandte Flanken 16, 17. Die zwischen den Sicken 15 verbleibenden Stege 18 weisen einen sich in Eindrehrichtung des Innengewindes 14 reduzierenden Radius R auf, der das Eindrehen einer dem Aufweiten der Spreizhülse 10 dienenden Schraube in das Innengewinde 14 erleichtert. Zur radialen Aufweitbarkeit der Spreizhülse 10 ist diese mit einem Längsschlitz 19 versehen.

Der aus Fig. 4 ersichtliche Spreizdübel weist eine Spreizhülse 20 mit einem in Setzrichtung vorderen Ende 21 und einem rückwärtigen Ende 22 auf. Die Spreizhülse 20 ist mit Sicken 25 versehen. Die Sicken 25 sind gegenüber der Längsachse der Spreizhülse 20 geneigt angeordnet. Durch diese geneigte Anordnung der Sicken 25 sind die Flanken 26 der Sicken 25 gegen das rückwärtige Ende 22 hingewandt.

Der aus Fig. 5 und 6 ersichtliche Spreizdübel weist eine Spreizhülse 30 mit einem in Setzrichtung vorderen Ende 31 und einem rückwärtigen Ende 32 auf. Die Spreizhülse 30 ist mit einer sich zum vorderen Ende 31 verengenden Bohrung 33 versehen und weist ausserdem ein vom rückwärtigen Ende 32 ausgehendes Innengewinde 34 auf. In dem sich zum vorderen Ende 31 verengenden Bereich ist die Spreizhülse 30 mit nach aussen geprägten Sicken 35 versehen. Die Sicken 35 sind so ausgebildet, dass der Durchmesser D des die Sicken 35 umgebenden Hüllkreises zum vorderen Ende 31 der Spreizhülse 30 hin zunimmt. Die Sicken 35 weisen somit gegen das rückwärtige Ende 32 hingewandte Flanken 36 auf. Zur Verstärkung der Spreizhülse 30 ist diese an ihrem vorderen Ende 31 mit einem nach aussen umgebogenen, umlaufenden Wulst 38 versehen. Der Aussendurchmesser A des Wulstes 38 entspricht im wesentlichen dem grössten Aussendurchmesser C der Spreizhülse 30. Dadurch wird eine gute Anlage der Spreizhülse 30 an der Bohrlochwandung und eine gleichmässige Verteilung des Spreizdruckes erreicht. Die Spreizhülse 30 weist ausserdem wenigstens einen der radialen Aufweitbarkeit der Spreizhülse 30 dienenden Längsschlitz 39 auf.

**Patentansprüche**

1. Spreizdübel mit teilweise axial geschlitzter Spreizhülse (10, 20, 30) aus Blech, die von ihrem der Setzrichtung abgewandten, rückwärtigen Ende (12, 22, 32) her mit einem Innengewinde (14, 34) versehen ist, eine sich zum vorderen Ende (11, 21, 31) hin verengende Bohrung (13, 33) aufweist und in dem sich verengenden Bereich mit nach aussen geprägten Sicken (15, 25, 35) versehen ist, **dadurch gekennzeichnet**, dass die Sicken (15, 25, 35) wenigstens eine zur Hülsenlängsachse geneigte, gegen das rückwärtige Ende (12, 22, 32) der Spreizhülse (10, 20, 30) hingewandte Flanke (16, 17, 26, 36) aufweisen.

2. Spreizdübel nach Anspruch 1, dadurch gekennzeichnet, dass die Sicken (15) eine gegen das vordere Ende (11) zunehmende Breite (b) aufweisen.

3. Spreizdübel nach Anspruch 1 oder 2, dadurch gekennzeichnet, dass die Sicken (25) gegenüber der Längsachse der Spreizhülse (20) geneigt angeordnet sind.

4. Spreizdübel nach einem der Ansprüche 1 bis 3, dadurch gekennzeichnet, dass der Durchmesser (D) des die Sicken (35) umgebenden Hüllkreises zum vorderen Ende (31) der Spreizhülse (30) hin zunimmt.

5. Spreizdübel nach einem der Ansprüche 1 bis 4, dadurch gekennzeichnet, dass die zwischen den Sicken (15) verbleibenden Stege (18) in Eindrehrichtung des Innengewindes (14) einen sich reduzierenden Radius (R) aufweisen.

6. Spreizdübel nach einem der Ansprüche 1 bis 5, dadurch gekennzeichnet, dass die Spreizhülse (30) an ihrem vorderen Ende (31) einen umlaufenden Wulst (38) aufweist.

7. Spreizdübel nach Anspruch 6, dadurch gekennzeichnet, dass der Wulst (38) nach aussen umgebogen ist.

8. Spreizdübel nach Anspruch 7, dadurch gekennzeichnet, dass der Aussendurchmesser (A) des Wulstes (38) im wesentlichen dem grössten Aussendurchmesser (C) der Spreizhülse (30) entspricht.

9. Spreizdübel nach einem der Ansprüche 6 bis 8, dadurch gekennzeichnet, dass das rückwärtige, freie Ende des Wulstes (38) sich im wesentlichen entlang der vorderen Hälfte der Spreizhülse (30) erstreckt.

## Revendications

1. Cheville à expansion comprenant une douille expansible fendue axialement partiellement (10, 20, 30), en tôle, qui est munie depuis son extrémité postérieure (12, 22, 32) écartée de la direction de pose, d'un taraudage (14, 34), comporte un alésage (13, 33) s'amincissant en direction de l'extrémité antérieure (11, 21, 31) et est munie dans la région s'amincissant de nervures estampées vers l'extérieur (15, 25, 35), caractérisée en ce que les nervures (15, 25, 35) comportent au moins un flanc (16, 17, 26, 36) incliné par rapport à l'axe longitudinal de la douille, tourné vers l'extrémité postérieure (12, 22, 32) de la douille expansible (10, 20, 30).

2. Cheville à expansion selon la revendication 1, caractérisée en ce que les nervures (15) présentent une largeur (b) croissant en direction de l'extrémité antérieure (11).

3. Cheville à expansion selon la revendication 1 ou 2, caractérisée en ce que les nervures (25) sont disposées inclinées par rapport à l'axe longitudinal de la douille expansible (20).

4. Cheville à expansion selon l'une quelconque des revendications 1 à 3, caractérisée en ce que le diamètre (D) du cercle d'enveloppe entourant les nervures (35) croît en direction de l'extrémité antérieure (31) de la douille expansible (30).

5. Cheville à expansion selon l'une quelconque des revendications 1 à 4, caractérisée en ce que les barrettes (18) subsistant entre les nervures (15) présentent un rayon (R) se réduisant dans le sens de vissage du taraudage (14).

6. Cheville à expansion selon l'une quelconque des revendications 1 à 5, caractérisée en ce que la douille expansible (30) comporte un bourrelet circulaire (38) à son extrémité antérieure (31).

7. Cheville à expansion selon la revendication 6, caractérisée en ce que le bourrelet (38) est courbé vers l'extérieur.

8. Cheville à expansion selon la revendication 7, caractérisée en ce que le diamètre extérieur (A) du bourrelet (38) correspond sensiblement au plus grand diamètre extérieur (C) de la douille expansible (30).

9. Cheville à expansion selon l'une quelconque des revendications 6 à 8, caractérisée en ce que l'extrémité libre postérieure du bourrelet (38) s'étend sensiblement le long de la moitié antérieure de la douille expansible (30).

## Claims

1. An expansible dowel having a partially axially slotted expansible sleeve (10, 20, 30) made of sheet metal, which from its rearward end (12, 22, 32) remote from the setting direction is provided with an internal thread (14, 34), has a bore (13, 33) narrowing towards the front end (11, 21, 31) and in the narrowing region is provided with the outwardly formed corrugations (15, 25, 35), characterised in that the corrugations (15, 25, 35) have at least one flank (16, 17, 26, 36) which is inclined to the longitudinal axis of the sleeve and is turned towards the rearward end (12, 22, 32) of the expansible sleeve (10, 20, 30).

2. An expansible dowel according to claim 1, characterised in that the corrugations (15) have a width (b) increasing towards the front end (11).

3. An expansible dowel according to claim 1 or 2, characterised in that the corrugations (25) are arranged inclined relative to the longitudinal axis of the expansible sleeve (20).

4. An expansible dowel according to one of claims 1 to 3, characterised in that the diameter (D) of the envelope surrounding the corrugations (35) increases towards the front end (31) of the expansible sleeve (30).

5. An expansible dowel according to one of claims 1 to 4, characterised in that the webs (18) remaining between the corrugations (15) have, in the screw-in direction of the internal thread (14), a reducing radius (R).

6. An expansible dowel according to one of claims 1 to 5, characterised in that the expansible sleeve (30) has, at its front end (31), an encircling bead (38).

7. An expansible dowel according to claim 6, characterised in that the bead (38) is bent over outwardly.

8. An expansible dowel according to claim 7, characterised in that the outside diameter (A) of the bead (38) corresponds substantially to the largest outside diameter (C) of the expansible sleeve (30).

9. An expansible dowel according to one of claims 6 to 8, characterised in that the rearward free end of the bead (38) extends substantially along the front half of the expansible sleeve (30).

Fig. 2

Fig. 1

Fig. 3

Fig. 4

Fig. 6

Fig. 5